# EUROPEAN PATENT APPLICATION

(11) **EP 2 899 436 A1**
(43) Date of publication of application: **29.07.2015**
(21) Application number: 14783510.2
(22) Date of filing: 07.04.2014
(51) Int. Cl.: F16J 15/34, C04B 35/80

(54) **SLIDING SEAL MEMBER**

(30) Priority: 09.04.2013 JP 2013081338
(71) Applicant: Eagle Industry Co., Ltd., Minato-ku Tokyo 105-8587 (JP); EagleBurgmann Japan Co., Ltd., Tokyo 105-8587 (JP)
(72) Inventor: TAKAHASHI, Hidekazu, Tokyo 105-8587 (JP); MIYAZAWA, Masami, Tokyo 105-8587 (JP); TANAKA, Akio, Tokyo 105-8587 (JP); YANAGISAWA Takashi, Tokyo 105-8587 (JP); SATO, Kimiyasu, Tokyo 105-8587 (JP)
(74) Representative: Schlief, Thomas P.
(86) International application number: PCT/JP2014/060091
(87) International publication number: WO 2014/168112

(57) **Abstract**

[Object] An object of the present invention is to provide a sliding seal member having the characteristics of silicon carbide, such as hardness and low wear, and further having preferable sealing property and lubricating property.

[Solving Means] There is provided a sliding seal member having a sliding surface which is slidable with other sliding member so as to seal a fluid by the sliding surface, comprising carbon fibers which are oriented substantially parallel to the sliding surface in a longitudinal direction of the carbon fibers and silicon carbide existing between the carbon fibers.

## Description

### TECHNICAL FIELD

The present invention relates to a sliding seal member used for a mechanical seal and the like.

### BACKGROUND ART

As a sliding seal member used for a mechanical seal and the like, the sliding seal member including silicon carbide has been proposed. The silicon carbide is a material capable of realizing a hard and low wear sliding member having favorable heat resistance and high young's modulus. On the other hand, however, the silicon carbide itself exhibits poor self-lubricating property, with the result that it is difficult to use the sliding seal member including such silicon carbide in a dry environment where the fluid lubricity is poor. Further, there is another problem that the sliding seal member including such silicon carbide is fragile due to low toughness, in spite of its hardness.

On the other hand, in the field of brake disc, technologies compensating for problems of silicon carbide material by using carbon fibers have been proposed (refer to Patent Documents 1 and 2).

### PRIOR ART DOCUMENTS

### PATENT DOCUMENTS

Patent Document 1: Japanese Patent Application Laid-Open Publication No. 2004-533388
Patent Document 2: Japanese Patent Application Laid-Open Publication No. 2012-153575

### SUMMARY OF THE INVENTION

### PROBLEMS TO BE SOLVED BY THE INVETNION

However, a silicon carbide/carbon composite material according to the prior arts which uses carbon fibers is a material used for the brake disc, and it exhibits high friction coefficients. When such composite material is used as the sliding seal member which requires the material exhibiting low friction coefficients, it is difficult to achieve both favorable sliding property and sealing property

The present invention has been made in view of the above problems and an object thereof is to provide a sliding seal member having the characteristics of silicon carbide, such as hardness and low wear, and further having preferable sealing property and lubricating property.

### MEANS FOR SOLVING THE TECHNICAL PROBLEMS

In order to solve the above problems, a sliding seal member according to the present invention having a sliding surface which is slidable with other member so as to seal a fluid by the sliding surface, comprises:
carbon fibers which are oriented substantially parallel to the sliding surface in a longitudinal direction of the carbon fibers, and
silicon carbide existing between the carbon fibers.

For the sliding seal member according to the present invention, the carbon fibers bring about a significant effect for sliding, and further the silicon carbide is harder than the carbon fibers and it serves as a load receiver for the opposing sliding member. The silicon carbide, which exists dispersedly between the carbon fibers, achieves favorable effects as the load receiver.

Further, the carbon fibers may form bundles in which the carbon fibers are oriented substantially in the same longitudinal direction of the carbon fibers, and the silicon carbide may exist between the carbon fibers forming the bundles.

With the existence of the carbon fiber bundles formed by the carbon fibers, a clearance having a specific length is formed between the carbon fibers and such clearance serves as a fluid reservoir. Specifically, by flowing and discharging the fluid through the clearance, the lubricating property improves. Further, with the existence of the silicon carbide between the carbon fibers forming the bundles, the load receiver is formed in a position closer to the carbon fibers, with the result that the loads are hardly applied to the carbon fibers.

Further, for example, the sliding seal member may further comprise non-fibrous carbon existing between one of the carbon fiber bundles and the other one of the carbon fiber bundles adjacent thereto.

With the existence of the non-fibrous carbon between the carbon fiber bundles adjacent to each other, the non-fibrous carbon serves as a self-lubricating agent, with the result that the sliding property further improves. Further, lapping is performed to form the sliding surface. However, the hardness of the carbon fibers themselves or the hardness of the silicon carbide in the carbon fiber bundles is higher than that of the non-fibrous carbon, therefore the non-fibrous carbon becomes lower than the carbon fiber bundles with respect to the sliding surface by such lapping treatment and this part also serves as the fluid reservoir. With this, the lubricating property improves.

Further, for example, the carbon fiber bundles formed on the sliding surface may be randomly oriented.

By randomly orienting the carbon fiber bundles, a path serving as a leakage path is hardly formed on the sliding surface, with the result that the fluid tends to be accumulated between the sliding surfaces.

Further, for example, an area ratio of the silicon carbide on the sliding surface may range from 35% or more to less than 85%.

By setting the area ratio of the silicon carbide at a predetermined value or above, it enables to ensure the amount of the silicon carbide supporting a contact force and thereby enables to support the loads. Further, by setting the area ratio of the silicon carbide less than the predetermined value, it enables to ensure the fluid reservoir formed by the clearance between the carbon fibers and thereby enables to improve the lubricating property.

Further, an arithmetic average roughness Ra of the sliding surface may be, for example, 0.2µm or less.

By setting the roughness of the siding surface within a predetermined range, it enables to effectively achieve both the lubricating property of the sliding surface and the leakage prevention of the sealed fluid from the sliding surface.

### BRIEF DESCRIPTION OF THE DRAWINGS

- **FIG. 1**: is a perspective view of the sliding seal member according to one embodiment of the present invention.
- **FIG. 2**: is a microphotograph of the sliding surface.
- **FIG. 3**: is a partially enlarged view of FIG. 2.

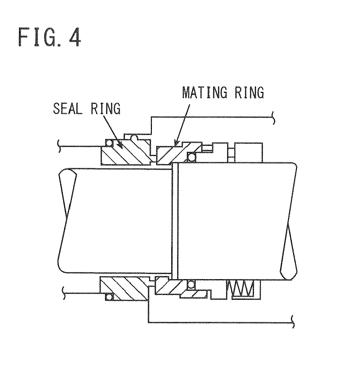

- **FIG. 4**: is a schematic view of a simulation testing machine used in a leaking test of Examples.
- **FIG. 5**: is a microphotograph of the sliding surface of samples produced in Examples.

### DESCRIPTION OF THE PREFERRED EMBODIMENTS

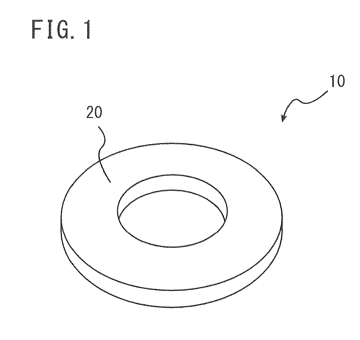

FIG. 1 is a perspective view of the sliding seal member 10 according to one embodiment of the present invention. For the sliding seal member 10, for example in a mechanical seal device, it is arranged at a boundary between a rotating member which rotates together with a rotary shaft and a static member which does not rotate. The sliding seal member 10 is typically used by paring the one fixed toward the rotating member with the one fixed toward the static member. The sliding member 10 comprises a sliding surface 20 slidable with the other sliding member which is used in pairs in order to seal the fluid by the sliding surface 20. The sliding member 10 illustrated in FIG. 1 has a through hole in the center and the outer shape thereof has a ring shape. Although one side of the sliding member 10 which is perpendicular to a penetrating direction of the through hole is the sliding surface 20, the shape of the sliding member is not particularly limited. Further, the sliding seal member of the present invention may be used as both rotating member and static member, or may be used as either one of them. When the sliding seal member is used as either one of them, as the other member, the sliding member composed of carbon, silicon carbide or hard metal alloy which are generally used for the mechanical seal is applied.

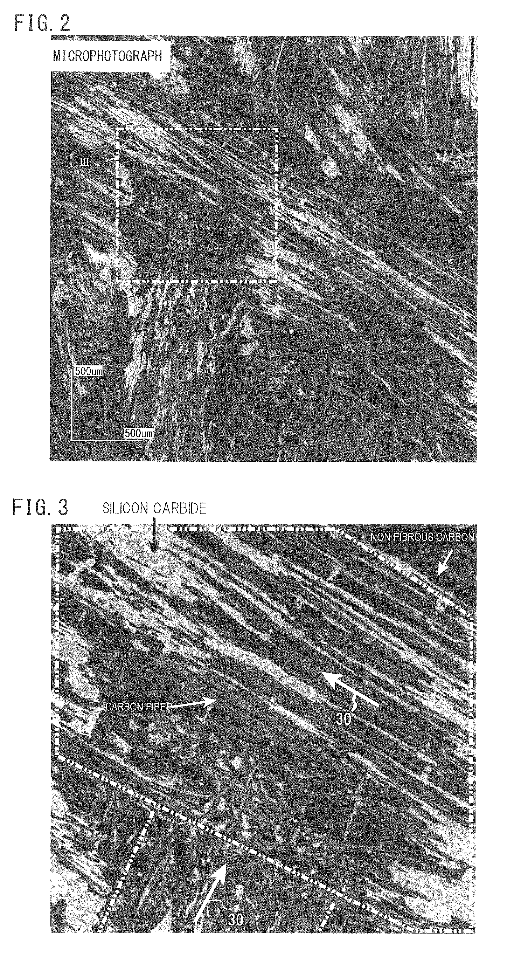

Although the sliding seal member 10 is mainly composed of carbon and silicon carbide, other materials such as silicon and the like may be included. FIG. 2 is a microphotograph of the sliding surface 20. On the sliding surface 20 of the sliding seal member 10, SiC-C fibrous structure derived from the carbon fiber structure which is used in a manufacturing process of the sliding seal member 10 is formed. In FIG. 2, the SiC-C fibrous structure is observed as a stripe-shaped structure extending along the fiber direction.

FIG. 3 is a partially enlarged view of FIG. 2. In FIGS. 2 and 3, portions appearing to be white indicate silicon carbide, portions appearing to be gray indicate carbon fibers, and portions appearing to be black among the carbon fibers indicate non-fibrous carbon. Further, the portion forming an aggregate in which the carbon fibers are oriented substantially in the same direction is one carbon fiber bundle, and the carbon fiber bundle and the stripe-shaped silicon carbide existing therein form the SiC-C fibrous structure. In the present specification, although the silicon carbide is composed of the silicon carbide (SiC) and the carbon fibers and the non-fibrous carbon are composed of carbon (C), inclusions of other materials such as impurities may be included. For the non-fibrous carbon, some exist between one of the carbon fiber bundles and the other one of the carbon fiber bundles adjacent thereto, some exist between the carbon fibers forming one carbon fiber bundle, and some exist between the silicon carbide or between the silicon carbide and the carbon fibers. The ratio and the arrangement of the non-fibrous carbon may be appropriately changed in accordance with the use of the sliding seal member 10.

The carbon fiber bundle has a width of approximately several tens µm to several hundreds µm along the direction vertical to the fiber direction 30. Further, there may be some portions where the aggregates are formed due to a concentration of the silicon carbide.

In the SiC-C fibrous structure, the carbon fibers forming the carbon fiber bundles and the silicon carbide existing between the carbon fibers alternately appear along the direction vertical to the fiber direction 30 (in a longitudinal direction of fibers). The one carbon fiber bundle in the SiC-C fibrous structure has a width of approximately 0.2mm to 4mm along the direction vertical to the fiber direction 30. Further, on the sliding surface 20, the plurality of carbon fiber bundles is formed so that respective fiber directions 30 of the bundles intersect with one another. The arrangement state of the respective carbon fiber bundles formed on the sliding surface 20 is not particularly limited, and the carbon fiber bundles having random fiber directions 30 may be dispersed on the sliding surface 20, and further, the plurality of carbon fiber bundles may be formed in a predetermined pattern such as weaving form. Furthermore, the fiber directions 30 of the carbon fiber bundles can be recognized by confirming the extending direction of the stripe-shaped silicon carbide or the carbon fibers included in the SiC-C fibrous structure.

Although the content ratio of the silicon carbide and the carbon (carbon includes carbon fibers and non-fibrous carbon) in the sliding member is not particularly limited, it is preferable that the area ratio of the silicon carbide on the sliding surface 20 ranges from 35% or more to less than 85%. By setting the area ratio of the silicon carbide to 35% or more, it enables to effectively reduce the leakage of the sealed fluid from the sliding surface 20. Further, by setting the area ratio of the silicon carbide to less than 85%, it enables to effectively improve the lubricating property of the sliding surface 20. Further, it is difficult to set the area ratio of the silicon carbide to 85% or more in the existing effective manufacturing method.

Further, it is preferable that the arithmetic average roughness Ra (JIS B 0601: 2001) of the sliding surface 20 is 0.01 µm or more to less than 1 µm. By setting the arithmetic average roughness Ra of the sliding surface 20 to 0.01 µm or more, it enables to effectively improve the lubricating property of the sliding surface 20. Further, by setting the arithmetic average roughness Ra of the sliding surface 20 to less than 1µm, it enables to prevent the leakage of the sealed fluid while maintaining the lubricating property of the sliding surface 20. Further, it is preferable that the skewness Psk (JIS B 0601 :2001) of the sliding surface 20 is within a negative range. By setting the skewness Psk within the negative range, it enables to prevent problems that a top of the projecting portion formed on the sliding surface 20 damages the opposing other member when sealing the fluid.

It is preferable that the carbon fibers existing on the sliding surface 20 are formed so that the fiber directions 30 are along the plane direction of the sliding surface 20. With this, it enables a sliding without damaging the opposing surface by the end portion of the carbon fibers. Further, it enables to prevent the leakage path from being formed inside the sliding seal ring and thereby enables to prevent the fluid from easily leaking. Further, the sliding surface 20 may include a silicon portion (in the silicon carbide portion, the silicon portion is observed as an aggregate which is whiter than the silicon carbide portion) composed of silicon (Si) in addition to the silicon carbide and carbon.

A manufacturing method of the sliding seal member 10 is explained as below. However, it is not limited to the followings only.

In a first stage of the manufacturing method of the sliding seal member 10, carbon fibers are prepared as a raw material. As for the carbon fibers prepared in the first stage, although it is not particularly limited, it may be, for example, PAN-based or pitch-based carbon fibers having a length of 1 mm to 10mm and a diameter of 5µm to 50µm. Further, it is preferable that the carbon fibers are oriented parallel to the surface serving as the sliding surface in a longitudinal direction of the carbon fibers, and furthermore, the carbon fibers are two-dimensionally and randomly oriented to the entire sliding surface. Here, among the carbon fibers appearing on the sliding surface, the ratio of the carbon fibers which are oriented parallel to the surface serving as the sliding surface in the longitudinal direction of the fibers is preferably 80% or more and the carbon fibers are preferably entirely arranged on the sliding surface. Depending on the manufacturing process, the carbon fibers which cannot be arranged parallel to the sliding surface may be included. Further, by the use of the sheet-shaped carbon fibers, they may be oriented parallel to the sliding surface in the longitudinal direction of the carbon fibers.

In a second stage of the manufacturing method of the sliding seal member 10, carbon powders or phenol resin is added to the carbon fibers which were prepared in the first stage for the formation. By firing it as necessary, a base whose outer shape substantially corresponds to that of the sliding seal member 10 is formed. Further, the base may be formed by laminating the carbon fibers formed into a sheet shape, adding the carbon powders or the phenol resin thereto for the formation followed by firing. Furthermore, the carbon derived from the carbon powders or the phenol resin forms the non-fibrous carbon on the sliding surface 20.

In a third stage of the manufacturing method of the sliding seal member 10, the silicon (Si) in a melt state is impregnated in the base which was formed in the second stage, and a part of the carbon as a base is converted to SiC by firing at a temperature of approximately 1,400 to 1,800 °C. After that, by polishing the surface (particularly, the surface corresponding to the sliding surface 20) as necessary, the sliding seal member 10 is obtained. Although the entire base does not have to be uniformly converted to SiC, it is preferable that a part of the base is converted to SiC, specifically from the sliding surface 20 of the manufactured sliding seal member 10 to the depth of at least 1 mm, so that the leakage path is hardly formed.

The followings are detailed explanations of the present invention based on Examples. However, the present invention is not limited to these Examples only.

In Examples, as shown in Table 1, samples 1 to 7 which are the sliding seal members 10 having a different area ratio of the silicon carbide on the sliding surface 20 were prepared and applied to the mechanical seal as seal rings to conduct a leakage test.

**[Table 1]**

| | Sample 1 | Sample 2 | Sample 3 | Sample 4 | Sample 5 | Sample 6 | Sample 7 |
|---|---|---|---|---|---|---|---|
| SiC converted Area Ratio % | 23,4 | 30,7 | 38,6 | 50,7 | 55,5 | 60,6 | 78,7 |
| PV (MPaG.m/s) | 8 | 8 | 8 | 8 | 8 | 8 | 8 |
| Temperature | R.T. | R.T | R.T. | R.T. | R.T. | R.T. | R.T. |
| Opposing M ember | C-SiC | C-SiC | C-SiC | C-SiC | C-SiC | C-SiC | C-SiC |
| Surface Roughness (µm) | 0.2∼ | -0.1 | -0.1 | -0.1 | -0.1 | -0.1 | -0.1 |
| Leakage | × | × | ○ | ○ | ○ | n | n |

The samples 1 to 7 were manufactured through the following steps; preparing the PAN-based carbon fibers which were formed into a sheet shape (first step), forming the base by laminating the sheet-shaped carbon fibers and hardening with the phenol resin followed by firing (second step), polishing the surface after impregnating the silicon in a melt state in the base and firing at a temperature of 1500°C (third step). The samples 1 to 7 were manufactured in the same way through the steps 1 to 2, and the conditions for SiC conversion in the third step were respectively adjusted to vary the area ratios of the silicon carbide on the sliding surface 20. For the manufactured samples 1 to 7, an image analysis was performed on the microphotographs of the sliding surface 20 by using a laser microscope, and the area ratios of the silicon carbide on the sliding surface 20 were measured by using an image processing software (refer to Table 1).

Further, by using a simulation testing machine, the leakage test was conducted on the sliding seal members 10 according to samples 1 to 7. For the conditions of the leakage test, water was used as a sealed fluid, the PV value which is a product of pressure of the sliding surface and the sliding velocity was set to 8MPaG·m/s, the temperature was set to a room temperature, and the same material was used as the opposing material in order to conduct the test. Table 1 shows the evaluation result. Further, in the items of the leaking test shown in Table 1, the leakage amount of less than 3ml/hr was determined as "O", and the leakage amount of 3ml/hr or more was determined as "×". Further, before the leakage test was conducted, the surface roughness of the sliding surface of each sample was measured.

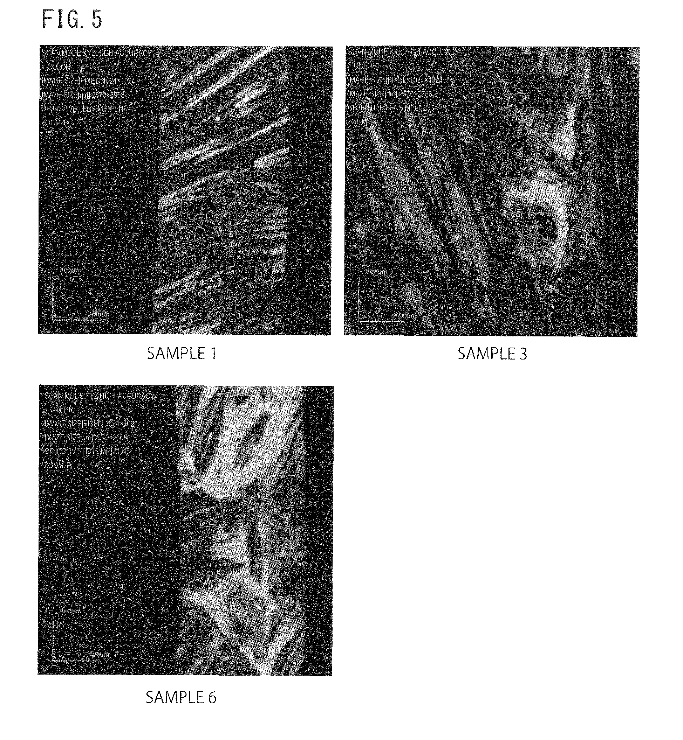

On the sliding surfaces 20 of samples 1 to 7, as shown in FIG. 5, it was confirmed that the SiC-C fibrous structure having the plurality of carbon fiber bundles wherein the fiber directions 30 of the respective bundles intersect with one another was formed, and the sliding seal members 10 according to samples 1 to 7 preferably inhibited the leakage of the sealed fluid from the sliding surface 20 while covering the problems of the silicon carbide exhibiting poor self-lubricating property. As shown in Table 1, particularly for samples 3 to 7 wherein the area ratio of the silicon carbide ranges from 35% or more to less than 85%, it enabled effectively to reduce the leakage of the sealed fluid from the sliding surface 20. Further, for samples 1 and 2 wherein the leakage was generated under the above condition, they enabled to appropriately function as a mechanical seal by changing the application condition, such as a reduction of the PV value.

As explained in the above Embodiments and Examples, the sliding seal member 10 has the SiC-C fibrous structure comprising the carbon fibers forming the carbon fiber bundles and the silicon carbide existing between the carbon fibers, with the result that it has characteristics of the silicon carbide such as hardness and low wear and further has preferable sealing property and lubricating property. In the SiC-C fibrous structure, the silicon carbide and the carbon fibers are finely tangled and it is considered that such SiC-C fibrous structure provides the sliding property to the sliding surface 20 by combining either one or a plurality of factors which will be described below. For example, the clearance is formed between the carbon fibers by arranging the carbon fibers adjacent to each other and the clearance serves as a fluid reservoir, with the result that the lubricating property can be provided. Further, the carbon fibers themselves serve as a lubricant. Further, by the lapping treatment, the hardness of the carbon fibers themselves or the hardness of the silicon carbide in the carbon fiber bundles is higher than that of the non-fibrous carbon, with the result that the non-fibrous carbon existing between the carbon fibers serves as the fluid reservoir by forming a recess portion recessed with respect to the carbon fiber bundles. With this, the sliding property can be provided. Further, the carbon forming the non-fibrous carbon portion serves as a solid lubricant, with the result that the sliding property can be provided.

Further, the carbon fibers in the respective carbon fiber bundles are randomly oriented in the longitudinal direction of the carbon fibers and thereby the leakage path is hardly formed on the sliding surface 20, with the result that it enables to retain the fluid on the sliding surface 20 and also enables to provide the sliding property to the sliding surface 20. Further, for the SiC-C fibrous structure which are formed by converting a part of the carbon fibers such as the surface of the carbon fibers to SiC, the carbon fibers and the silicon carbide have a favorable bonding property between them, with the result that it enables to preferably prevent the problems such as cracking or chipping generated on the sliding seal member 10. Further, the silicon carbide in the SiC-C fibrous structure has high hardness, therefore it enables to provide a favorable wear resistance to the sliding seal member 10 and also enables to prevent too many clearances from being formed on the sliding surface 20. As above, for the sliding seal member 10 capable of achieving both the lubricating property of the sliding surface 20 and the leakage prevention of the sealed fluid from the sliding surface 20, it can be particularly preferably used under the conditions such as high temperature, high pressure, and high-speed to which the conventional sliding materials cannot be applicable.

Further, the sliding seal member 10 may be used in pairs with the sliding member wherein the SiC-C fibrous structure is formed on the sliding surface 20 in the same way. However, the other sliding member used in pairs with the sliding seal member 10 may have a composition or structure in which metals are included, or only carbon or silicon carbide is included and the like, which is different from the sliding seal member 10.

### DESCRIPTION OF THE REFERENCE NUMERALS

- 10: sliding seal member
- 20: sliding surface

## Claims

1. A sliding seal member having a sliding surface which is slidable with other member so as to seal a fluid by the sliding surface, comprising:
carbon fibers which are oriented substantially parallel to the sliding surface in a longitudinal direction of the carbon fibers, and
silicon carbide existing between the carbon fibers.

2. The sliding seal member as set forth in claim 1, wherein
the carbon fibers form bundles in which the carbon fibers are oriented substantially in the same longitudinal direction of the carbon fibers, and the silicon carbide exists between the carbon fibers forming the bundles.

3. The sliding seal member as set forth in claim 2, further comprising:
non-fibrous carbon existing between one of the carbon fiber bundles and the other one of the carbon fiber bundles adjacent thereto.

4. The sliding seal member as set forth in claim 3, wherein
the carbon fiber bundles formed on the sliding surface are randomly oriented.

5. The sliding seal member as set forth in claim 4, wherein
an area ratio of the silicon carbide on the sliding surface ranges from 35% or more to less than 85%.

6. The sliding seal member as set forth in claim 5, wherein
an arithmetic average roughness Ra of the sliding surface is 0.2µm or less.
